# EUROPÄISCHE PATENTANMELDUNG

(11) **EP 4 657 309 A1**
(43) Veröffentlichungstag der Anmeldung: **03.12.2025**
(21) Anmeldenummer: 25177660.5
(22) Anmeldetag: 20.05.2025
(51) Int. Cl.: G06K 7/10, G06F 3/00, G06F 3/01

(54) **BARCODELESER MIT BEWEGUNGSAUSLÖSUNG**

(30) Priorität: 27.05.2024 DE 102024114853
(71) Anmelder: NIMMSTA GmbH, 85617 Assling (DE)
(72) Erfinder: Heinzl, Stefan, 83550 Emmering (DE); Richter, Stefan, 83539 Pfaffing (DE); Funkenhauser, Andreas, 85617 Aßling (DE); Ruhland, Florian, 85435 Erding (DE)
(74) Vertreter: Misselhorn, Hein-Martin

(57) **Zusammenfassung**

Barcodescanner mit mindestens einer Lesekopfeinheit und Mitteln zur Befestigung der mindestens einen Lesekopfeinheit an einer Hand und/oder einem Arm des Benutzers, sowie einer Steuerungseinheit und einem Beschleunigungsaufnehmer, der die Beschleunigungen misst, die bei der Bewegung der Hand (egal ob Hand allein oder Hand mit Arm ) auftreten, wobei der Barcodescanner so eingerichtet ist, dass er die Lesekopfeinheit zum Scannen veranlasst, sobald der Scanner eine Beschleunigung misst, die eine erste Grenzbeschleunigung überschreitet, und eine sich daran anschließende erste Ruhephase, in der die Hand im Wesentlichen ruht.

## Beschreibung

Die Erfindung betrifft einen Barcodescanner und ein Verfahren zu seinem Betrieb.

### TECHNISCHER HINTERGRUND

Die Verwendung von Barcodescannern ist weit verbreitet.

Ursprünglich kamen Barcodescanner hauptsächlich als in der Hand gehaltene Geräte zum Einsatz, mit denen die zu erfassenden Gegenstände nacheinander abgescannt werden.

Gerade dort, wo nicht nur temporär mit dem Barcodescanner gearbeitet werden muss, sondern er dauerhaft zur Hand sein muss - etwa im Automobilbau an den Montagebändern, um zu dokumentieren, dass die richtigen Teile verbaut worden sind -, werden mittlerweile am Handrücken getragene Barcodescanner verwendet. Diese ermöglichen es dem Benutzer, beide Hände frei zu haben, ohne den Barcodescanner zwischenzeitlich irgendwo ablegen zu müssen.

Um mit ihnen zu scannen, werden bisher am Handrücken getragene Scanner entweder durch Berühren ihres Touchscreens ausgelöst oder durch Drücken eines Auslöseknopfes. Ein solcher Auslöseknopf ist häufig an der Flanke des Zeigefingers angebracht und wird dann mit dem Daumen betätigt.

### PROBLEM

Gerade dort, wo in kurzen Abständen der Barcode vieler Güter erfasst werden muss, stellen sich zwei Probleme.

Das Auslösen des Scanners über seinen Touchscreen ist für Massenscans zu zeitraubend.

Das Auslösen des Scanners über das Drücken eines ergonomisch gut positionierten Auslöseknopfes geht an sich sehr schnell. Hier droht allerdings die Gefahr, dass sich der Benutzer relativ schnell ein Problem einhandelt, das man gemeinhin als Maus-Hand bezeichnet: Durch das häufige Drücken des Auslöseknopfes am Zeigefinger mit dem Daumen werden die Sehnen des Daumens gereizt oder es droht sogar ein Karpaltunnelsyndrom.

Auf ein gesondertes Auslösen des Scanners zu verzichten und seinen Lesekopf immerzu in der Bereitschaft zu halten, einen Barcode auszulesen, ist nicht zielführend, denn das führt dazu, dass sich der Akku des Scanners zu schnell entlädt.

Alternativ ist schon mehrfach der Vorschlag gemacht worden, den Scanner dadurch auszulösen, dass vom Benutzer eine bestimmte Bewegung mit dem Scanner gemacht wird. Um ein unbeabsichtigtes Auslösen durch eine alltägliche Bewegung zu verhindern, muss eine solche zum Auslösen führende Bewegung allerdings relativ speziell sein. Auch diese Technologie konnte sich daher bislang nicht durchsetzen, da hier bislang noch das Problem besteht, dass die Bewegung, die zum Auslösen führen soll, bislang oft nicht sicher genug erkannt wird. Der Benutzer ist dann mit dem Problem konfrontiert, in regelmäßigen Abständen eine Auslösebewegung wiederholen zu müssen. Das wird schnell als lästig empfunden, weil es den Arbeitsfluss zum Stocken bringt.

### AUFGABE

Demgegenüber ist es die Aufgabe der Erfindung, einen Scanner bereitzustellen, der durch eine sehr einfach zu erlernende Bewegung ausgelöst wird, ohne dass es in nennenswertem Umfang zu Fehlauslösungen kommt.

### LÖSUNG

Als Lösung wird ein Barcodescanner nach Maßgabe des Hauptanspruchs vorgeschlagen.

Dieser Barcodescanner besitzt mindestens eine Lesekopfeinheit. Er verfügt über Mittel zur Befestigung dieser mindestens einen Lesekopfeinheit an einer Hand oder einem Arm des Benutzers, bevorzugt auf dem Handrücken und/oder an einem Finger der Hand.

Darüber hinaus verfügt der erfindungsgemäße Barcodescanner über eine Steuerungseinheit und einen Beschleunigungsaufnehmer.

Die Lesekopfeinheit, die Steuerung und der Beschleunigungsaufnehmer und das optionale Gyroskop sind zweckmäßigerweise alle in einem gemeinsamen Gehäuse eingebaut, das idealerweise auf dem Handrücken des Benutzers befestigt wird - mit einer Griffschlaufe oder besser mittels eines Teil- oder Vollhandschuhs oder eines fingerlosen Überziehers. Ansonsten können auch unterschiedliche Teilgehäuse verwendet werden. Letztere können dann teilweise auch am Unterarm oder mittels eines Fingerrings an einem Finger befestigt werden und ggf. drahtlos miteinander kommunizieren. Optional kann nach wie vor auch einer der bekannten Aktivierungsknöpfe vorgesehen sein, dessen sich der Benutzer bedient, insbesondere wenn er gerade mit einem nur geringen Scanaufkommen konfrontiert ist und daher den Lesekopf jeweils konventionell in Gang setzen will.

Der Beschleunigungsaufnehmer misst die Beschleunigungen, die bei Bewegung der Hand auftreten.

Die Erfindung zeichnet sich dadurch aus, dass der Barcodescanner so eingerichtet ist, dass er die Lesekopfeinheit zum Scannen veranlasst, sobald der Scanner eine Beschleunigung misst, die eine erste Grenzbeschleunigung überschreitet und daran anschließend eine erste Ruhephase detektiert, in der die Hand des Benutzers vollständig, zumindest im Wesentlichen Die erste Ruhepause ist dabei optional mindestens 0,175 Sekunden, in mach anderen Fällen mindestens 0,2 Sekunden lang, gelegentlich aber auch mindestens 0,75 Sekunden lang, sollte aber im Allgemeinen 1,0 Sekunden nicht überschreiten.

Zum Maß der Dinge für das Auslösen wird also nicht eine bloße Beschleunigung gemacht, sondern eine Art Bewegungsmuster. Dieses besteht aus einer einen vorgegebenen Grenzwert überschreitenden Beschleunigung, an die sich - im Regelfall im Wesentlichen unmittelbar, im Regelfall "jäh" binnen eines Sekundenbruchteils, der meist kürzer ist als die Ruhephase selbst - eine erste Ruhephase anschließt. Ein derartiges Bewegungsmuster ist typisch für einen vom Benutzer gewünschten Scanvorgang. Denn der Benutzer schwenkt seine Hand aus der bisherigen Position relativ schnell in eine Position, in der die auf dem Handrücken befestigte Lesekopfeinheit etwa mit dem zu scannenden Barcode fluchtet. Dann hält der Benutzer plötzlich still, um der Lesekopfeinheit das Erfassen des zu scannenden Barcodes zu ermöglichen. Ein solch abrupter Bewegungswechsel von einer sehr schnellen Bewegung zu einer Ruhephase kommt im allgemeinen Bewegungsablauf, wenn nicht gescannt werden soll, nur relativ selten vor. Denn meistens folgen aus anderen Gründen ausgeführten, nicht von dem Wunsch zu scannen getragenen, abrupten Bewegungen der Hand noch einige Bewegungen mit abklingender Intensität - bevor auch dann irgendwann wieder eine Ruhephase eintritt.

Die Erfindung erübrigt es also, eine bestimmte Bewegung erlernen und ausführen zu müssen, die den Scanner aktiviert, bevor er dann im nächsten Schritt auf das zu scannende Etikett mit dem Barcode ausgerichtet wird, um erst dann den eigentlichen Scanvorgang in Angriff nehmen zu können. Stattdessen liegt es im Wesen der Erfindung, zu erkennen, wenn sich der Benutzer anschickt, den Lesekopf auf dem Barcode, der zu scannen ist, auszurichten und aktiviert dann den Lesekopf. Hierdurch wird eine besonders zuverlässige Aktivierung des Lesekopfes erreicht. Zudem erspart sich der Benutzer auch Zeit, da oft nicht erst einmal irgendeine ihrerseits Zeit in Anspruch nehmende, insbesondere Bewegung ausgeführt werden muss, um den Lesekopf zu aktivieren.

### BEVORZUGTE WEITERBILDUNGSMÖGLICHKEITEN DER ERFINDUNG

In der Praxis kommen recht häufig Fälle vor, in denen nicht nur ein Barcode erkannt werden muss, sondern nacheinander gleich eine ganze Serie von Barcodes eingelesen werden müssen, etwa wenn in einer Warenausgabe eine größere Zahl von Paketen auf einmal ausgegeben wird. Es wäre höchst ermüdend für den Benutzer des Barcodelesers, wenn er zu diesem Zweck zehnmal eine starke Bewegung machen müsste, um damit den Barcodescanner jeweils für einen Scanvorgang auszulösen.

Bevorzugt ist daher vorgesehen, dass der Barcodescanner so eingerichtet ist, dass er den Lesekopf immer dann, wenn schon ein erster Scanvorgang durch eine entsprechend starke Bewegung mit darauffolgender erster Ruhephase ausgelöst und erfolgreich verarbeitet worden ist, erneut zum Scannen veranlasst, wenn er innerhalb einer definierten Folgezeit eine Beschleunigung misst, die wenigstens eine zweite Grenzbeschleunigung überschreitet, die niedriger als die erste Grenzbeschleunigung ist, und eine sich daran anschließende zweite Ruhephase feststellt, in der die Hand im Wesentlichen ruht. Diese Ausgestaltung beruht auf der Erkenntnis, dass beim Serienscannen zwischen den einzelnen Scanvorgängen Bewegungen stattfinden, die aber nicht besonders abrupt oder stark sind. Denn der Benutzer des Scanners schwenkt jeweils die Hand nur ein Stück, um das nächst folgende Paket scannen zu können. Dann hält er wieder still, um dem Lesekopf das Erfassen des auf dem jeweiligen Etikett abgedruckten Barcodes zu ermöglichen.

Auf diese Art und Weise lassen sich Serienscans sehr schnell und mit nur geringer Ermüdungsgefahr bewältigen.

Ein solcher Serienscan lässt sich bequem fortsetzen. Er endet erst dann, wenn entweder nach dem letzten Scannen kein Bewegungsereignis mehr festgestellt werden kann oder zwar ein Bewegungsereignis festgestellt wird, dieses Bewegungsereignis aber diejenige Zeitdauer mehr als nur unwesentlich überschreitet, die eigentlich erforderlich ist, um den Lesekopf von einem Barcode auf den nächsten zu lesenden Barcode auszurichten, sodass innerhalb der erwarteten Zeitspanne keine zweite Ruhephase oder keine weitere Ruhephase erfolgt. Ist das der Fall, dann wird der Lesekopf aufgrund der entsprechenden Ausstattung des Scanners erst dann wieder aktiv, wenn wieder das Überschreiten einer ersten, höheren Grenzbeschleunigung detektiert wird und eine anschließende erste Ruhephase.

Es ist sinnvoll, den Barcodescanner so auszurüsten, dass der Betrag der ersten Grenzbeschleunigung vom Benutzer selbst eingestellt werden kann. Idealerweise verfügt der Barcodescanner hierfür über einen Touchscreen, über den die entsprechenden Eingaben vorgenommen werden können.

Eine solche Einstellungsmöglichkeit für die Grenzbeschleunigung führt dazu, dass der Benutzer seine Arbeit mit einer relativ hoch eingestellten ersten

Grenzbeschleunigung beginnen kann. Er wird dadurch von Anfang an nur mit wenigen Fehlauslösungen konfrontiert. Er hat dann a priori den Eindruck, gut mit dem Gerät arbeiten zu können, was zu einer gesteigerten Akzeptanz führt. Mit zunehmender Erfahrung, wie der gestengesteuerte Barcodescanner reagiert, kann der Benutzer dann die erste Grenzbeschleunigung geringer einstellen. Nun kann er den Barcodescanner noch müheloser bedienen als bisher, wird dabei aber aufgrund seiner wachsenden Erfahrung auch nicht häufiger mit Fehlauslösungen konfrontiert.

Sinngemäß Gleiches gilt für die Möglichkeit des Benutzers, die zweite Grenzbeschleunigung nach seiner Vorliebe einzustellen. Gerade bei sehr umfangreichen Serienscans kann der Benutzer dann die zweite Grenzbeschleunigung so weit herabsetzen, dass der Lesekopf nach einer nur sehr kleinen Bewegung mit anschließender Wartezeit wieder zuverlässig ausgelöst wird. Auch wenn hierdurch pro Scanvorgang nur Sekundenbruchteile eingespart werden, macht sich das doch deutlich bemerkbar, wenn beispielsweise ein Serienscannen von 50 Barcodes vorgenommen werden muss. Demgegenüber hat ein anderer Benutzer, der kaum Serienscans bewältigen muss, die Möglichkeit, die zweite Grenzbeschleunigung hoch eingestellt zu lassen, um so sicher zu verhindern, dass es nach dem ersten Scanvorgang fehlerhafterweise zu einem zweiten Scanversuch kommt.

Besonders günstig ist es, die jeweilige Grenzbeschleunigung dadurch einzustellen, dass der Barcodescanner die Möglichkeit eines Angelernt-Werdens bietet. Zu diesem Zweck wird eine entsprechende Bewegung, die der Benutzer macht, vom Barcodescanner aufgenommen und dann als Referenz abgespeichert. Auf diese Art und Weise ist es möglich, dass der Benutzer die zum Auslösen erforderliche Grenzbeschleunigung besonders komfortabel erzeugen kann, nämlich durch eine Bewegung, die er gerne ausführt. Auch das erhöht die Akzeptanz signifikant.

In der Praxis zeigt sich, dass die erste Grenzbeschleunigung betragsmäßig nicht unter 0,65 g besser nicht unter 0,8 g liegen sollte. Denn wenn dieser Grenzwert unterschritten wird, dann steigt die Zahl der Fehlauslösungen erfahrungsgemäß signifikant an. Sinngemäß Gleiches gilt für die zweite Grenzbeschleunigung. Hier hat sich ein verglichen mit der ersten Grenzbeschleunigung geringerer Betrag, oft ein Mindestbetrag von 0,45 g oder besser 0,6 g, als praktisch gut brauchbare Untergrenze erwiesen.

Um insbesondere Massenscans zu beschleunigen, ist es günstig, die Mindestzeitdauer der ersten Ruhephase, die diese benötigt, um als eine solche akzeptiert zu werden, größer einzustellen als die Mindestzeitdauer der zweiten Ruhephase, die diese benötigt, um als eine solche akzeptiert zu werden. Denn nach dem ersten Scanvorgang sind die typischen weiteren Scanvorgänge eines Massenscans gut zu erkennen. Aus diesem Grund reicht dann beim Folgescan schon eine relativ kurze Pause des Stillhaltens, um mit hoher Wahrscheinlichkeit davon ausgehen zu können, dass der Benutzer seine Hand mit dem Scanner gerade auf den nächsten Barcode ausgerichtet hat. Gegebenenfalls kann man sogar nicht nur einen Unterschied zwischen einer ersten oder zweiten Ruhephase vorsehen, sondern im Anschluss an die zweite Ruhephase weitere Ruhephasen vorsehen, die tendenziell noch kürzer werden können.

Auch in diesem Zusammenhang kann es sinnvoll sein, den Barcodescanner so auszugestalten, dass der Benutzer die Länge der ersten und/oder der zweiten Ruhephase nach seinen eigenen Bedürfnissen einstellen kann, um dadurch eine Gestenauslösung des Barcodescanners zu erreichen, die ihm zuverlässig und nicht zeitraubend erscheint.

Besonders günstig kann es sein, den Barcodescanner zusätzlich mit einem Gyroskop auszustatten. Das Gyroskop kann die Funktion des Beschleunigungsabnehmers ergänzen.

Bei Verwendung eines Gyroskops kann der Barcodescanner so eingerichtet sein, dass er eine bestimmte, auch hohe Beschleunigung nur dann als Überschreitung der ersten Grenzbeschleunigung interpretiert, wenn das Gyroskop dabei eine bestimmte erste Art der Handbewegung misst, etwa eine hin und her gehende Drehbewegung der Hand im Wesentlichen um die Längsachse des Unterarms, oder eine hin und her gehende Kippbewegung der Hand um das Handgelenk.

Ein derart weiterentwickelter Barcodescanner kann beispielsweise auch von ungeübten Personen sofort mit hoher Zuverlässigkeit bedient werden. Das erleichtert es beispielsweise Springern, die nur ausnahmsweise an dem jeweiligen Bandmontage-Arbeitsplatz oder Versandarbeitsplatz arbeiten, von Anfang an besonders effektiv zu arbeiten.

Es kann sinnvoll sein, auch zu der Detektion der zweiten Grenzbeschleunigung das Gyroskop heranzuziehen. Dann wird eine bestimmte, eigentlich hinreichend hohe Beschleunigung nur dann als eine Beschleunigung interpretiert, die die zweite Grenzbeschleunigung überschreitet, wenn das Gyroskop eine bestimmte zweite Art der Handbewegung misst, etwa eine überwiegend translatorische Handbewegung. Zusätzlich kann auch ein Magnetfeldsensor verwendet werden um die Erdbeschleunigung zu kompensieren und weitere Verfeinerungen zu erreichen. Der Magnetfeldsensor und der Gyrosensor werden dabei im Regelfall algorithmisch miteinander verknüpft.

### FIGURENLISTE

Die Figur 1 zeigt schematisch einen erfindungsgemäßen Barcodescanner.
Die Figur 2 gibt einen Überblick über den grundlegenden inneren Aufbau des von dem bevorzugten Ausführungsbeispiel gezeigten Barcodescanners.

### BEVORZUGTES AUSFÜHRUNGSBEISPIEL

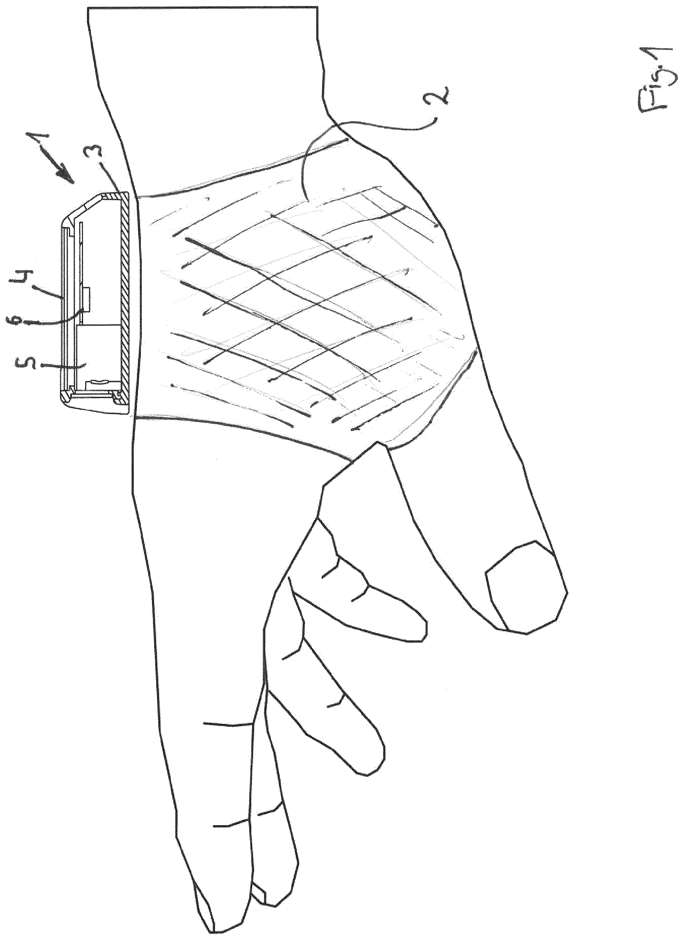

Die Figur 1 zeigt ein bevorzugtes Ausführungsbeispiel eines erfindungsgemäßen Barcodescanners 1. Wie man sieht, kann er an einer handschuhartigen Manschette 2 befestigt und mit ihrer Hilfe auf dem Handrücken gehalten sein. Hier wird eine Ausdrucksform gezeigt, bei der alle Komponenten in einem gemeinsamen Gehäuse 3 angeordnet sind. Das ist vorteilhaft, aber nicht zwingend notwendig, so wie schon oben ausgeführt.

Das Gehäuse verfügt hierbei über einen oberseitigen Touchscreen 4. Gut zu erkennen ist auch die Lesekopfeinheit 5. Zusätzlich ist eine CPU 6 vorhanden, die hier die insgesamt für den Betrieb erforderliche Datenverarbeitung leistet, also die Messwerte des hier nicht im Einzelnen gezeigten Gyroskops und des hier nicht gezeigten Beschleunigungsaufnehmers auswertet und zuordnet. Ebenfalls nicht zu erkennen ist die Batterie und die in vielen Fällen in dem Gehäuse enthaltene Leiterschleife, die ein kabelloses, induktives Aufladen der Batterie ermöglicht.

Nicht zuletzt, was die Art der Befestigung und die Ausgestaltung des Gehäuses 3 am Handschuh angeht und was die Art, Positionierung und Befestigung des optional zusätzlichen Triggers angeht, der als alternatives zusätzliches Auslösemittel vorgesehen sein kann, wird auf das ältere Schutzrecht DE 20 2020 100 866 U1 der Anmelderin verwiesen, dessen Offenbarung hiermit in vollem Umfang zum Gegenstand dieser Anmeldung gemacht wird.

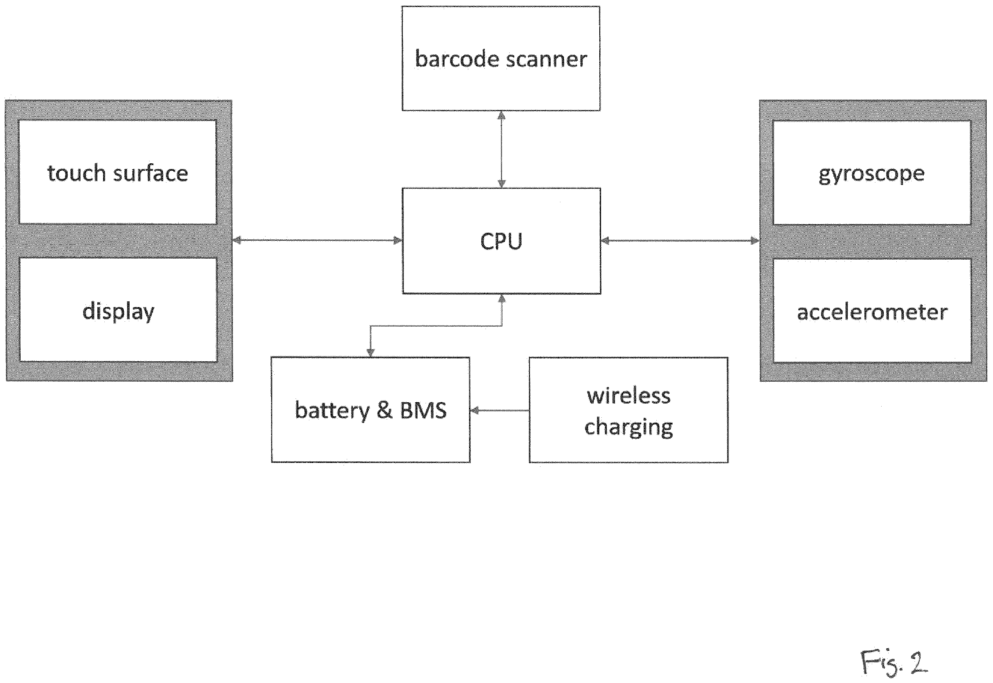

Die Figur 2 zeigt, schematisch, den inneren Aufbau des Barcodescanners 1.

### BEZUGSZEICHENLISTE

- 1: Barcodescanner
- 2: Manschette
- 3: Gehäuse
- 4: Touchscreen mit Display
- 5: Lesekopfeinheit
- 6: CPU

## Patentansprüche

1. Barcodescanner (1) mit mindestens einer Lesekopfeinheit (5) und Mitteln zur Befestigung der mindestens einen Lesekopfeinheit (5) an einer Hand und/oder einem Arm des Benutzers, sowie einer Steuerungseinheit und einem Beschleunigungsaufnehmer, der die Beschleunigungen misst, die bei der Bewegung der Hand (egal ob Hand allein oder Hand mit Arm ) auftreten, **dadurch gekennzeichnet, dass** der Barcodescanner (1) so eingerichtet ist, dass er die Lesekopfeinheit (5) zum Scannen veranlasst, sobald der Scanner eine Beschleunigung misst, die eine erste Grenzbeschleunigung überschreitet, und eine sich daran anschließende erste Ruhephase, in der die Hand im Wesentlichen ruht.

2. Barcodescanner (1) nach Anspruch 1, **dadurch gekennzeichnet, dass** der Barcodescanner (1) so eingerichtet ist, dass er nach einem Scanvorgang gemäß Anspruch 1 die Lesekopfeinheit (5) erneut zum Scannen veranlasst, wenn er innerhalb einer definierten Folgezeit eine Beschleunigung misst, die eine zweite Grenzbeschleunigung überschreitet, die niedriger ist als die erste Grenzbeschleunigung, und eine sich daran anschließende zweite Ruhephase, in der die Hand im Wesentlichen ruht.

3. Barcodescanner (1) nach Anspruch 2, **dadurch gekennzeichnet, dass** der Barcodescanner (1) so eingerichtet ist, dass er nach einem Scanvorgang gemäß Anspruch 2 die Lesekopfeinheit (5) immer wieder zum Scannen veranlasst, solange er innerhalb der definierten Folgezeit eine Beschleunigung misst, die die zweite Grenzbeschleunigung überschreitet, und eine sich daran weitere Ruhephase oder zweite Ruhephase, in der die Hand im Wesentlichen ruht.

4. Barcodescanner (1) nach einem der vorhergehenden Ansprüche, **dadurch gekennzeichnet, dass** der Betrag der ersten Grenzbeschleunigung und/oder der Betrag der zweiten Grenzbeschleunigung vom Benutzer des Barcodescanners (1) eingestellt werden kann, vorzugsweise durch einen Anlernvorgang, bei dem der Benutzer des Barcodescanners (1) eine Bewegung ausführt, die als Referenzbewegung verwendet wird, um die erste oder zweite Grenzbeschleunigung betragsmäßig einzustellen und abzuspeichern.

5. Barcodescanner (1) nach einem der vorhergehenden Ansprüche, **dadurch gekennzeichnet, dass** die erste Grenzbeschleunigung betragsmäßig nicht unter 0,65 g liegt.

6. Barcodescanner (1) nach einem der vorhergehenden Ansprüche, **dadurch gekennzeichnet, dass** die zweite Grenzbeschleunigung betragsmäßig nicht unter 0,45 g liegt.

7. Barcodescanner (1) nach einem der vorhergehenden Ansprüche, **dadurch gekennzeichnet, dass** die erste Ruhephase länger ist als die zweite Ruhephase und ggf. weitere Ruhephasen.

8. Barcodescanner (1) nach einem der vorhergehenden Ansprüche, **dadurch gekennzeichnet, dass** die Länge der ersten und/oder der zweiten Ruhephase vom Benutzer des Barcodescanners (1) eingestellt werden kann.

9. Barcodescanner (1) nach einem der vorhergehenden Ansprüche, **dadurch gekennzeichnet, dass** der Barcodescanner (1) zusätzlich über ein Gyroskop verfügt und so eingerichtet ist, dass er bei Überschreiten der ersten Grenzbeschleunigung nur dann die Lesekopfeinheit (5) zum Scannen veranlasst, wenn das Gyroskop eine bestimmte erste Art der Handbewegung misst.

10. Barcodescanner (1) nach Anspruch 9, **dadurch gekennzeichnet, dass** die bestimmte erste Art der Handbewegung im Wesentlichen eine Rotation der Hand um die Längsachse des Unterarms ist und/oder eine Kippbewegung der Hand im Handgelenk.

11. Barcodescanner (1) nach einem der vorhergehenden Ansprüche, **dadurch gekennzeichnet, dass** der Barcodescanner (1) zusätzlich über ein Gyroskop verfügt und so eingerichtet ist, dass er bei Überschreiten der zweiten Grenzbeschleunigung nur dann die Lesekopfeinheit (5) zum Scannen veranlasst, wenn das Gyroskop eine bestimmte zweite Art der Handbewegung misst.

12. Barcodescanner (1) nach Anspruch 11, **dadurch gekennzeichnet, dass** die bestimmte zweite Art der Handbewegung eine Handbewegung ist, die überwiegend einer translatorischen Handbewegung entspricht.

13. Verfahren zum Betreiben eines Barcodescanners (1) nach einem der vorhergehenden Ansprüche, **dadurch gekennzeichnet, dass** als Auslösekriterium für einen ersten Scanvorgang das Auftreten einer Beschleunigung, die größer ist als eine erste Grenzbeschleunigung, herangezogen wird, aber nur, wenn auf sie im Wesentlichen unmittelbar eine erste Ruhephase folgt.

14. Verfahren nach Anspruch 13, **dadurch gekennzeichnet, dass** als Auslösekriterium für einen dem ersten Scanvorgang nachfolgenden zweiten Scanvorgang das Auftreten einer Beschleunigung, die größer ist als eine zweite Grenzbeschleunigung, herangezogen wird, aber nur, wenn auf sie im Wesentlichen unmittelbar eine zweite Ruhephase folgt.

15. Verfahren nach Anspruch 13 oder 14 mit weiteren verfahrensbezogenen Merkmalen aus den Vorrichtungsansprüchen oder der Beschreibung.
